# EUROPEAN PATENT SPECIFICATION

(11) **EP 3 655 644 B1**
(45) Date of publication and mention of the grant of the patent: **27.11.2024**
(21) Application number: 18743391.7
(22) Date of filing: 12.07.2018
(51) Int. Cl.: F03D 1/06, F03D 80/30

(54) **WIND TURBINE BLADE**
WINDTURBINENSCHAUFEL
PALE D'ÉOLIENNE

(30) Priority: 20.07.2017 DK PA201770584
(43) Date of publication of application: 27.05.2020
(73) Proprietor: Vestas Wind Systems A/S, 8200 Aarhus N (DK)
(72) Inventor: HURAULT, Jeremy, Southampton Hampshire SO19 8FQ (GB); KAMRUZZAMAN, Mohammad, Southampton Hampshire SO19 7DG (GB); ROWLINSON, Ben, Cowes Isle of Wight PO31 8QX (GB)
(74) Representative: Vestas Patents Department
(86) International application number: PCT/DK2018/050182
(87) International publication number: WO 2019/015731

(56) References cited:
- WO-A1-2014/075976
- WO-A1-2016/019468
- DE-A1- 102005 051 537
- DE-U1- 20 301 445
- US-A1- 2015 217 851
- US-B2- 8 573 541

## Description

### FIELD OF THE INVENTION

The present invention relates to a wind turbine blade having a conductive blade tip. The invention also relates to the conductive blade tip and a method of retro-fitting the conductive blade tip to an existing wind turbine blade.

### BACKGROUND OF THE INVENTION

Wind turbines are vulnerable to being struck by lightning; sometimes on the tower, nacelle and the rotor hub, but most commonly on the blades. A lightning strike event has the potential to cause physical damage to the turbine blades and also electrical damage to the internal control systems of the wind turbine. Wind turbines are often installed in wide open spaces which makes lightning strikes a common occurrence. Accordingly, in recent years much effort has been made by wind turbine manufacturers to design wind turbines so that they are able to manage effectively the energy imparted to them during a lightning strike in order to avoid damage to the blade and the associated cost of turbine down-time during blade repair or replacement.

Lightning protection systems for wind turbine blades are known. In one example, an electrically conductive lightning receptor element is arranged on an outer surface of the blade to receive a lightning strike. Since the receptor element is electrically conductive, lightning is more likely to attach to the receptor element in preference to the relatively non-conductive material of the blade. The receptor element is connected to a cable or 'down conductor' that extends inside the blade to the root and from there connects via an armature arrangement to a charge transfer route in the hub, nacelle and tower to a ground potential. Such a lightning protection system therefore allows lightning to be channelled from the blade to a ground potential safely, thereby minimising the risk of damage. However, the discrete receptor elements are relatively complex to install during fabrication of the blade and, moreover, they leave a significant portion of blade area exposed to a risk of lightning strike.

Observation of the effects of lightning strikes on turbine blades has revealed that the highest proportion of lightning strikes happen at the blade tips. To address this, WO2005/031158 A2 proposes a turbine blade having a solid metal tip. Configuring the tip of the blade in this way makes the tip highly resilient to frequent highly energetic lightning strikes and means that inspection and servicing events are required less often. However, one drawback of such a configuration is the challenge of integrating the metal tip into the rest of the blade structure in as seamless a way as possible whilst ensuring robustness against weathering. A further example is described in WO2015/055213 A1, in which a metal blade tip module is attached to a wind turbine blade by way of an insert member that is built in to the tip of the blade during manufacture. DE102005051537 A1 describes a method of attaching a replacing top which is made of electrically conducting material. US2015/217851 A1 describes a wing where at least one of the major surfaces comprises cyclic spanwise variations at or near the leading edge. US8573541 B2 describes a shape of airfoil to achieve an improved lift to drag ratio and to improve performance at higher angles of attack, with a three dimensional wave pattern that modifies the shape of a traditional airfoil to coordinate the airflow through channels on both the top and bottom sides.

These solid metal blade tip lightning receptors are conformal with the shape of the blade and have been proven effective at attracting lightning strikes thereby protecting the vulnerable material of the blade from being damaged. However, it has been observed that the junction between the tip receptor and the blade is vulnerable to wear from erosion and from lightning strike and that, over time, the tip receptors begin to show heat erosion.

It is against this background that the invention has been devised.

### SUMMARY OF THE INVENTION

A first aspect of the invention provides a wind turbine blade comprising: a main blade portion having a longitudinal axis that extends between a root end and a tip end of the main blade portion, and a conductive blade tip module coupled to a lightning protection system of the wind turbine blade, the conductive blade tip module is mounted to the tip end of the main blade portion and has a leading edge, a trailing edge, a windward surface extending between the leading edge and the trailing edge, and a leeward surface extending between the leading edge and the trailing edge, wherein the main blade portion comprises a blade tip interface that is the outermost part of the main blade portion which engages with and is coupled to the blade tip module, wherein the blade tip module leading edge has a wave-like profile and/or wherein at least one of the windward and leeward surfaces of the blade tip module has a plurality of grooves extending towards the trailing edge, and wherein the blade tip module has a chord length at a root end that is greater than a chord length of the blade tip interface.

The term 'conductive' is used here to refer to the ability of the blade tip module to achieve good electrical conductivity. This should be interpreted in the context of a lightning receptor forming part of a lightning protection system for the wind turbine blade and/or for a wind turbine to which the blade is attached.

The term 'wave-like profile' is used here to refer to the wavy, undulating or sinuous external shape of the leading edge of the blade tip module. The wave-like profile of the leading edge may be as observed in 'planform', i.e. perpendicular to the longitudinal (or spanwise) axis of the blade and perpendicular to the local chordline at the tip end of the main blade portion.

The invention is advantageous in that the wave-like profile of the blade tip module leading edge and/or the grooves of the windward or leeward surfaces of the blade tip module provide aerodynamic improvements at the tip and reduce aerodynamic noise. To be robust against lightning strike the blade tip module may have a geometry that is not well suited to optimizing aerodynamic efficiency, e.g. larger minimum thickness of material, or larger minimum radius of curvature. The wave-like profile leading edge and the surface grooves may provide aerodynamic improvements to offset in full or in part the detrimental aerodynamic effect of shape features that ensure sufficient lightning strike robustness.

The wave-like profile of the blade tip module leading edge may comprise a plurality of rounded protuberances extending forwardly. In this context 'forwardly' means in the direction against the oncoming airflow. No strict flow alignment is intended by use of his term. The rounded protuberances create a depression between each adjacent pair of protuberances. The protuberances are of a macro scale. For example the protuberances may have a dimension of the order of millimeters or centimeters. The protuberances may be thought of as relatively large 'bumps' at the leading edge.

The wave-like profile of the blade tip module leading edge may be configured to channel air flow over the blade tip module into a plurality of streams at increased flow velocities relative to the upstream flow. The profiled leading edge may be configured to promote the so-called 'tubercule effect'. The tubercule effect works by dividing or channeling the upstream (oncoming) airflow into narrower streams over the downstream aerodynamic surface. This flow division energizes the flow by increasing the flow velocity of the narrower streams, delaying flow detachment and stall. Channeling the flow in this way also reduces three dimensional aerodynamic tip effects (of the blade as a whole) that would otherwise tend to allow the flow to roll up into a single vortex sheet at the very tip of the blade. Large vortex shedding causes noise and lower aerodynamic efficiency. By reducing the three dimensional flow, the tubercule effect reduces the strength of tip vortices resulting in lower parasitic drag.

The wave-like profile of the blade tip module leading edge may be substantially sinusoidal. The 'peaks' or 'troughs' of the wave-like profile need not follow a straight line and may be curved. The spacing between adjacent peaks or troughs may be regular or somewhat irregular. The wave-like profile may follow a smooth curve without a cusp. The wave-like profile may include a plurality of peaks and a plurality of troughs.

The wave-like profile may extend along substantially the entire leading edge of the blade tip module. The leading edge of the blade tip module extends from a blade tip module root end to a blade tip module tip end.

The trailing edge of the blade tip module may be curved. The trailing edge of the blade tip module may be convex (when viewed in planform), and preferably the trailing edge of the blade tip module is smoothly curved and/or devoid of a point of inflection.

The plurality of grooves may extend from adjacent the leading edge of the blade tip module. The grooves may extend from a location at the leading edge of the blade tip module. Alternatively, the grooves may extend from a location behind the leading edge (in the downstream chordwise direction) of the blade tip module. Further alternatively one or more grooves may extend from a location adjacent the leading edge and one or more grooves may extend from a location behind the leading edge.

The plurality of grooves create channels in the outer surface of the blade tip module. The grooves may extend at an angle to the chordline at the tip end of the main blade portion. In particular, the grooves may extend towards the chordline at the tip end of the main blade portion in the direction towards the trailing edge. These grooves are of a macro scale. For example the grooves may have a dimension of the order of centimeters in length, and millimeters or centimeters in width. Each groove may have a valley defined between two adjacent ridges one on either side of the valley. The grooves are configured to create an interference effect with the airflow so as to accelerate the airflow through the grooves. Energizing the flow through the grooves delays flow detachment and stall.

Although the grooves may be provided in the absence of the wave-like profiled leading edge in some arrangements, the grooves may be provided in combination with the wave-like profiled leading edge to synergistic effect in other arrangements. Whereas the wave-like profiled leading edge may promote the tubercule effect described above, aligning the grooves with the narrower streams created by the tubercule effect may be used to further energize the flow, delaying flow detachment and stall.

The plurality of grooves may each extend up to approximately 50% to 80% of the blade tip module local chord. The plurality of grooves may each extend up to approximately 60% to 70% of the blade tip module local chord. Preferably the grooves do not extend up to the trailing edge. Preferably the grooves terminate in front of the trailing edge, e.g. at a location at most 70% to 80% of the local chord from the leading edge.

The plurality of grooves may each extend from a depression between adjacent protuberances of the wave-like profile at the blade tip module leading edge.

The plurality of grooves may each have a depth which decreases in the direction towards the trailing edge.

The plurality of grooves may each have a width which decreases in the direction towards the trailing edge.

The plurality of grooves may each smoothly taper into the windward or leeward surfaces towards the trailing edge of the blade tip module.

The plurality of grooves may each have a rounded profile, e.g. forming a U-shaped valley between inverted U-shaped adjacent ridges.

The plurality of grooves may extend substantially linearly along their length. The grooves may alternatively be curved along their length.

The plurality of grooves may extend generally parallel to one another. Alternatively the grooves may be convergent or divergent, creating small (e.g. less than 5-10 degrees) angles between adjacent grooves.

The plurality of grooves may each extend at an angle to the local chordline of the tip end of the blade tip module. Angling the grooves may aid in resisting flow spilling over the inboard edge of the blade tip module and separating from the surface. This may reduce the risk of vortex shedding which would otherwise increase noise levels.

The plurality of grooves may be provided on both the windward and leeward surfaces of the blade tip module. The grooves of the windward surface may be aligned substantially above the grooves of the leeward surface. This arrangement may be particularly preferred where the grooves are used in combination with the wave-like leading edge such that grooves of the windward and leeward surfaces extend from a common depression in the leading edge. Alternatively, and particularly where the grooves do not extend from a common depression in the leading edge (or indeed may not extend from a depression in the leading edge at all), the grooves of the windward surface may not be aligned above the grooves of the leeward surface and may be up to 180 degrees out of synchronization with each other. Further alternatively, the grooves may be provided in only one of the windward and leeward surfaces of the blade tip module.

The blade tip module may be metal. The blade tip module may be substantially solid, although one or more recesses may be provided inside the blade tip module. The blade tip module preferably consists exclusively of metal. The blade tip module may be manufactured by casting, using a one or two-piece mould for example. The blade tip module may be a single component. The material of the blade tip module may be substantially devoid of cavities.

The blade tip module may comprise a highly electrically conductive material. For example, the blade tip module may comprise or consist of material having electrical conductivity of at least 13.8% IACS (International Annealed Copper Standard). The highly electrically conductive material may be Copper, or a Copper Alloy such as bronze for example.

The blade tip module may comprise a material having a high melting temperature, e.g. in excess of 850 degrees Celsius.

The blade tip module is coupled to a lightning protection system of the wind turbine blade. The blade tip module may be connected to a down conducting system so that electrical energy from a lightning strike is directed away from the tip to a lightning management system installed in a tower of the wind turbine. The down conducting system may include a down conductor running along the length of the main blade portion from the tip end to the root end.

The tip end of the main blade portion may be truncated with a blade tip interface that defines an outer edge. The blade tip module may be configured to fit against the blade tip interface such that a lip of the blade tip module overlaps the outer edge of the blade tip interface.

Since the blade tip module may be configured to overlap the truncated tip of the blade, this may protect the junction between the two components from erosion due to weathering. The overlapping geometry may seal with the blade to protect the junction from erosion due to electrical heating of the blade tip module experienced during lightning strikes.

The lip also promotes a thicker, more rounded geometry for the blade tip module. For ideal robustness to lightning strike a material depth of around 10mm may be preferred. However, the thicker the material, the worse the aerodynamic performance is likely to be (especially at the trailing edge) and so depths of less than 10mm are likely to be preferred. Again, for ideal robustness to lightning strike a radius of curvature of around 10mm may be preferred. However, the greater the radius of curvature, the worse the aerodynamic performance is likely to be (especially at the trailing edge) and so radii of less than 10mm are likely to be preferred.

The absence of small radii or sharp edges on the outer surface of the blade tip module (which would otherwise attract lightning strikes) may ensure that even traditionally thin regions (like the trailing edge) are sufficiently rounded to provide robustness to lightning wear and tear.

Having a thicker and more rounded geometry results in lower aerodynamic performance due to separation of the boundary layer and higher drag. Additionally there is also likely an impact on the tip noise due to the change in geometry and flow separation. The wave-like leading edge and the grooves aid aerodynamic performance to mitigate these effects.

The blade tip module may have a depth of conductive material at every point on an exterior surface thereof that is at least 3.5 mm, preferably at least 5mm. The 'depth' is measured normal to the exterior surface.

The blade tip module may have a radius of curvature at every point on an exterior surface thereof that is at least 3.5mm, preferably at least 5mm.

The blade tip module may have a length (in the direction of the longitudinal axis of the blade) that is less than 1% and preferably between 0.1 % and 0.5 % of the total blade length.

The overlapping lip of the blade tip module may extend about the entirety of the outer edge of the blade tip interface.

The lip of the blade tip module may surround a recess in the blade tip module. The blade tip interface may be received into the recess so that the lip of the blade tip module overlaps the outer edge of the blade tip interface.

The recess may comprise an edge wall. The edge wall and the outer edge of the blade tip interface may define complementary aerofoil profiles. The edge wall may have a shape matching the outer edge of the blade tip interface.

An end face of the blade tip module may be transverse to a part of the main blade portion surface which it overlaps.

An attachment plate may protrude from the blade tip interface to be received into a pocket defined in the blade tip module. The attachment blade may physically attach the blade tip module to the tip end of the main blade portion. The attachment plate may be a conductive coupler, electrically coupled to a down conductor in the blade and to the blade tip module. The blade tip module may have bolt holes for attaching to the attachment plate. The holes may be recessed, and filled and smoothed after bolting so that the original surface geometry is unaffected.

The blade tip module has a root chord length that is greater than the chord length of the blade tip interface.

The blade tip module may have a root chordline angled away from the chordline at the blade tip interface. The root chordline may extend generally parallel to the plurality of grooves. The root chordline may be straight or may be curved.

The blade tip module may have a root thickness that is greater than the thickness of the blade tip interface.

The leading edge of the blade tip module may extend beyond a leading edge of the main blade portion at the blade tip interface.

The trailing edge of the blade tip module may extend beyond a trailing edge of the main blade portion at the blade tip interface.

The blade tip interface may be transverse to the longitudinal axis of the main blade portion.

The blade tip interface may be substantially perpendicular to a longitudinal axis of the main blade portion.

A further aspect of the invention provides the blade tip module of the first aspect of the invention.

A yet further aspect of the invention provides a wind turbine including the wind turbine blade of the first aspect of the invention.

A yet further aspect of the invention provides a method of retrofitting an existing wind turbine blade, comprising removing an existing blade tip module from the blade, and attaching the blade tip module of the first aspect of the invention to the blade.

### BRIEF DESCRIPTION OF THE DRAWINGS

Embodiments of the invention will now be described with reference to the accompanying drawings, in which:
Figure 1 illustrates a wind turbine in accordance with an example of the invention;
Figure 2 illustrates a perspective view of one of the blades of the wind turbine of Figure 1, and shows in an inset panel an enlarged view of a tip region of the blade in more detail;
Figure 3 shows detail of the tip end of the blade;
Figure 4 shows a planform view of the blade and blade tip module;
Figure 5 shows a schematic section view through the blade tip module;
Figures 6 to 8 show further views of the blade tip module from various angles;
Figure 9 shows schematic representations of velocity streamlines over the surface of the blade tip module;
Figure 10 shows schematic representations of vorticity activity from the blade tip module;
Figure 11 shows a schematic section view of the blade tip module attached to the blade;
Figures 12 to 15 show further variants of the blade tip module; and
Figure 16 shows the steps of retrofitting the blade tip module to an existing wind turbine blade.

### DETAILED DESCRIPTION OF EMBODIMENT(S)

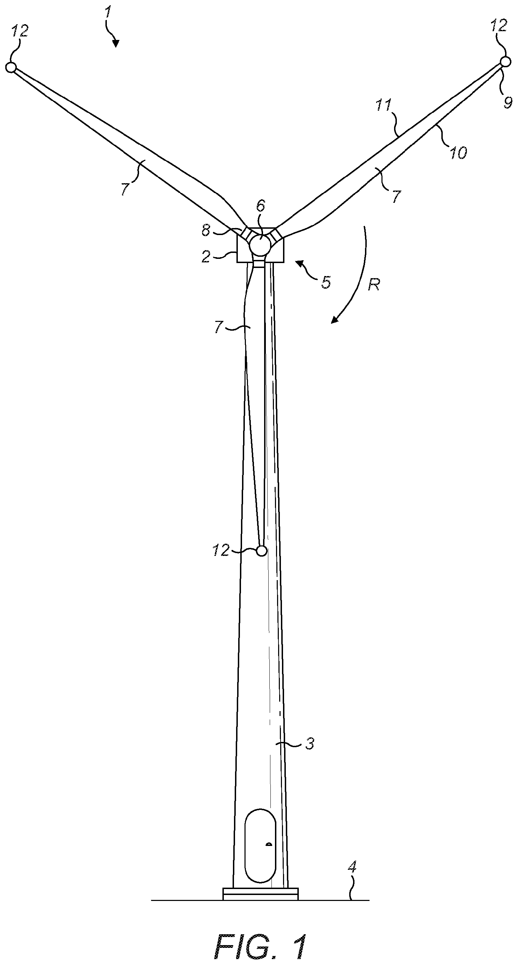

Figure 1 shows a wind turbine 1 including a nacelle 2 supported on a tower 3 that is mounted on a foundation 4. The wind turbine 1 depicted here is an onshore wind turbine such that the foundation 4 is embedded in the ground, but the wind turbine 1 could be an offshore installation in which case the foundation 4 would be provided by a suitable marine platform.

The nacelle 2 supports a rotor 5 comprising a hub 6 to which three blades 7 are attached. It will be noted that the wind turbine 1 is the common type of horizontal axis wind turbine (HAWT) such that the rotor 5 is mounted at the nacelle 2 to rotate about a substantially horizontal axis defined at the centre at the hub 6. As is known, the blades 7 are acted on by the wind which causes the rotor 5 to rotate about its axis thereby operating generating equipment that is housed in the nacelle 2. The generating equipment is not shown in figure 1 since it is not central to the examples of the invention.

Each of the blades 7 has a root end 8 proximal to the hub 6 and a tip end 9 distal from the hub 6. A leading edge 10 and a trailing edge 11 extend between the root end 8 and tip end 9. The tip end 9 of each blade 7 is provided with a conductive blade tip module 12, which is shown in conceptualised form in figure 1, which will be described in more detail in the following.

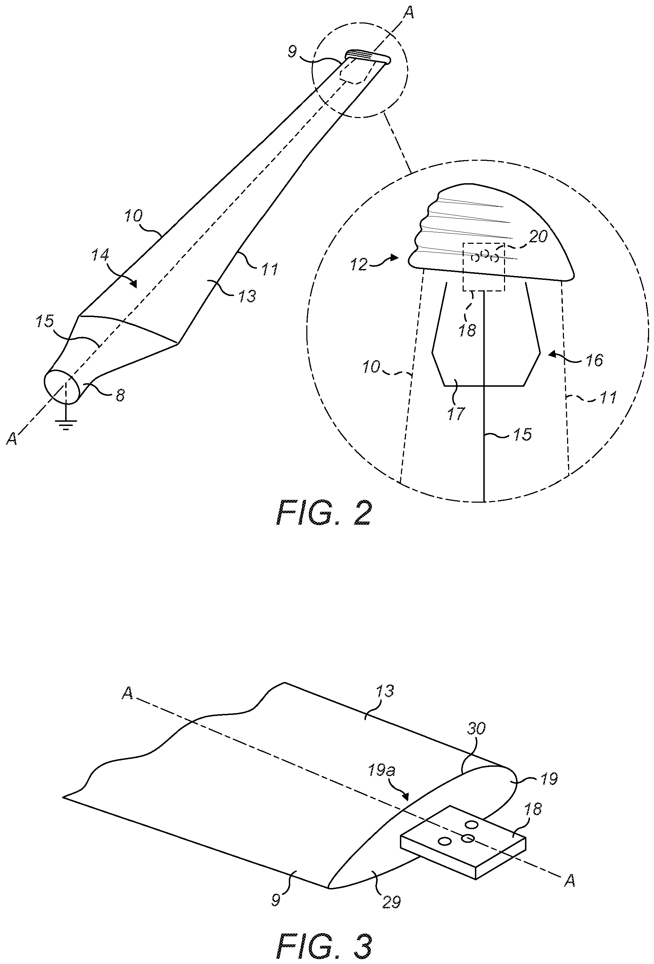

One of the blades 7 is shown in an enlarged form in figure 2 in which the shape of the blade tip module 12 is more clearly apparent. The blade tip module 12 is attachable to the tip end 9 of a main blade portion 13 of the blade 7 and is at least partly of metallic construction so that it is conductive and functions as a tip lightning receptor for the blade 7. In this example, the blade tip module 12 is solid metal and made of a suitable material such as copper or a copper alloy such a brass, by way of non-limiting example. It is envisaged that the blade tip module 12 would be a cast component, although various manufacturing techniques would be suitable.

So that it can act as a lightning receptor, the blade tip module 12 is attached to a lightning protection system 14 of the blade. In this example, the lightning protection system 14 is shown schematically as a down conductor cable 15 running along the length of the blade 7 to the root end 8 where it earths via a suitable energy handling mechanism (not shown). It should be appreciated that lightning protection systems may be more complex than shown here, but the precise form and detail of the lightning protection system is not relevant to the discussion.

In the illustrated example, the blade tip module 12 is not an integral part of the blade but is attached to the blade after the blade has been manufactured. The tip end 9 of the blade 7 therefore comprises an attachment system 16 for attaching the blade tip module 12 to the tip end 9 of the blade 7. The attachment system 16 comprises an insert member 17 which is a polymeric lozenge-like part which houses a metallic attachment plate 18 or "coupler". The attachment plate 18 is conductive and is preferably solid metal such as stainless steel, although other metals (e.g. copper) or metal alloys are acceptable. The down conductor 15 is electrically connected to the attachment plate 18 within the insert member 17 which is injection moulded around the plate 18.

During manufacturing, the blade 7 is formed from a blade shell having two half shells. The half shells are typically moulded from glass fibre reinforced plastic (GFRP) that comprises glass fibre fabric embedded in a cured resin matrix. The precise construction of the blade shell is not central to the invention and so further detailed description is omitted for clarity. During fabrication of the blade 7, the insert member 17 is adhesively bonded into the interior cavity of the blade 7 and is positioned so that the attachment plate 18 protrudes from a blade tip interface 19 of the blade (as shown in figure 3) thereby providing an anchoring tab to which the blade tip module 12 can be attached. In an illustrated example, the blade tip interface 19 is the outer most part of the main blade portion 13 which engages with and is coupled to the blade tip module 12. Here the blade tip interface 19 is substantially planar.

It is preferred that the blade tip module 12 is sufficiently large to encompass the high curvature regions of the leading and trailing edges at the blade tip, although due to the solid metal tip being of relatively high mass, it is generally an aim for the tip to be as small as possible without reducing its functionality. Generally, therefore, the blade tip module 12 has a length that is less than 1% of the total blade length and more preferably below 0.5% of the total blade length. By way of example, on a blade with a length of 60 metres the tip may be approximately 10cm in length.

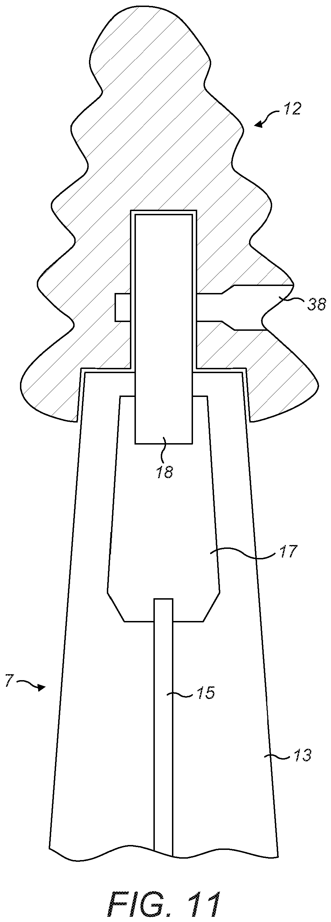

The moulded insert member 17 provides an anchor by which the blade tip module 12 may be attached into the blade 7 during the fabrication process. For example, during the layup of the blade, suitable blade skin and other structural components such as glass fabric layers or pre-preg materials may be arranged in a truncated blade mould that does not have a mould surface shaped to define a blade tip. The attachment system 16 may then be arranged with respect to the mould such that the insert member 17 lies against the prepared blade skin component and the blade tip module 12 is located against the truncated end of the mould. In the conventional way the insert member 17 may then be incorporated into the blade during a resin impregnation process so that, following curing, the attachment system 16, forms an integral part of the blade 7, the insert member 17 providing a bonding surface to hold the attachment system 16 in the blade shells, as shown in figure 11.

In the illustrated example, the blade tip module 12 is attached to the protruding tab portion of the attachment plate 18 by a set of suitable mechanical fasteners 20, such as bolts. In general, the insert member 17 may take the form as described in WO2015/055213, by way of example. In such an arrangement, it is preferred, although not essential, that the down conductor 15 is welded to the plate 18 prior to the insert member 17 being moulded over the plate 18 in which case the down conductor 15 forms a unit with the attachment system 16 for the purposes of the blade fabrication process. However, it should be noted that the attachment system 16 described here illustrates one way to incorporate the blade tip module 12 to the blade 7 and that the skilled person could conceive of other ways to achieve this.

The blade 7 has a longitudinal or "spanwise" axis A and the blade tip interface 19 extends transverse to the blade longitudinal axis A and is aligned with the local chord of the blade aerofoil section at the tip end 9 of the main blade portion 13.

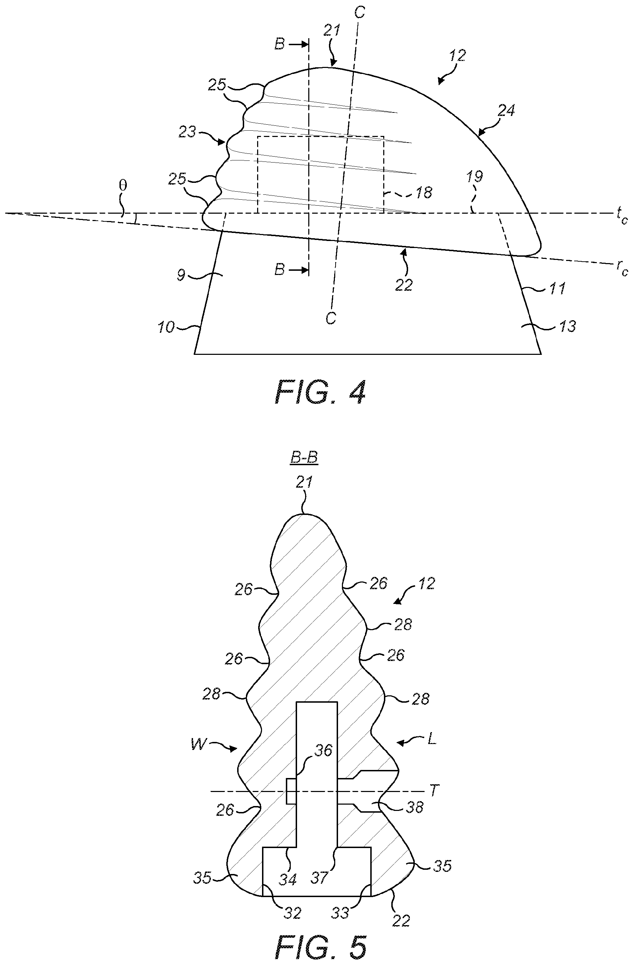

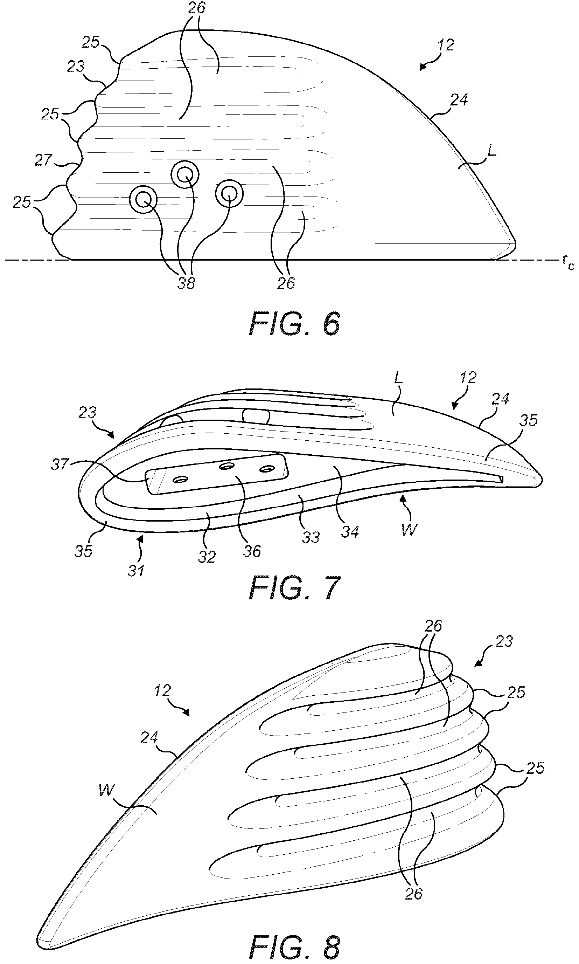

The blade tip module 12 is shown in greater detail in figures 4-8. The blade tip module 12 has a tip end 21 which faces away from the blade 7 and a root end 22 which faces towards the blade 7. The blade tip module 12 has an aerofoil profile in cross section, as best shown in figure 7, and has a leading edge 23 and a trailing edge 24. Notably, the blade tip module 12 has a chord length at the root 22 that is greater than the chord length of the blade tip interface 19. The blade tip module leading edge 23 extends forward beyond the leading edge 10 of the blade 7 at the tip interface 19, and/or the blade tip module trailing edge 24 extends rearwards beyond the trailing edge 11 of the blade 7 at the tip interface 19.

Note, here, that the terms "forwards" and "rearwards" are used with respect to the normal direction of rotation "R" of the HAWT 1, as shown in figure 1. Note also that the term "chord length" is the dimension taken across the blade chord through the trailing edge and leading edge. Since the blade chord length varies with spanwise position, and also rotates due to twist of the blade, here the chord length is expressed as being at the tip end 9 of the main blade portion 13, i.e. at the blade tip interface 19.

It is to be particularly noted that, as shown in Figure 4, the blade tip module 12 has a longitudinal axis C which forms an angle with the longitudinal axis A of the main blade portion 13. The longitudinal axis C of the blade tip module 12 is taken perpendicular to the blade tip module root chord, r_{c}. An angle between the blade tip module longitudinal axis C and the main blade portion longitudinal axis A is the so called toe angle, θ. In the illustrated embodiment, the blade tip module 12 has a root chord line, r_{c}, angled away and extending inboard (toward the hub 6) from the blade tip interface chord line, t_{c}, in the downstream direction to create a 'toe in' angle θ.

The blade tip module 12 has a windward surface, W, extending between the leading edge 23 and the trailing edge 24 on the same side of the blade to the windward surface of the main blade portion 13. The blade tip module 12 has a leeward surface, L, extending between the leading edge 23 and the trailing edge 24 on the same side of the blade to the leeward surface of the main blade portion 13. The windward surface is the aerodynamic high pressure surface (i.e. the pressure surface) and the leeward surface is the aerodynamic low pressure surface (i.e. the suction surface) of the blade.

The leading edge 23 of the blade tip module has a wave-like profile when observed in planform, as shown in Figure 4. The wave-like profile comprises a plurality of rounded protuberances 25 extending forwardly. The wave-like profile appears substantially sinusoidal and is configured to channel air flow over the blade tip module 12 into a plurality of streams at increased flow velocities relative to the upstream flow. The wave-like profile extends along substantially the entire leading edge 23. The wave-like profile of the leading edge 23 promotes the so called 'tubercule effect'.

The blade tip module 12 also includes a plurality of grooves 26 extending towards the trailing edge 24. The grooves 26 each extend from a depression 27 between adjacent protuberances 25 of the wave-like profile leading edge 23. As best shown in the section view of Figure 5, the grooves 26 are provided in both the windward, W, and leeward, L, surfaces of the blade tip module 12. The grooves 26 create ridges 28 between an adjacent pair of the grooves 26. The grooves 26 are located such that the grooves 26 on the windward surface, W, are substantially above and aligned with the grooves 26 on the leeward surface, L, in the thickness direction, T, of the blade tip module12.

As best shown in Figures 6 and 8, the grooves have a depth (in the thickness direction) which decreases in the downstream chordwise direction. The grooves also have a width (along the longitudinal axis C) which decreases in the downstream chordwise direction. The grooves have a rounded profile such that the grooves 26 are smoothly curved into the ridges 28 on both the windward and leeward surfaces. The grooves extend up to approximately 60%-70% of the local chord as measured from the leading edge 23 of the blade tip. The grooves 26 have a longitudinal axis which is substantially linear such that the grooves extend generally parallel to one another.

The longitudinal axis of the grooves is substantially parallel to the root chord, r_{c}, of the blade tip module 12. The grooves smoothly taper in to the windward and leeward surfaces such that the region beyond around 70% of the chord from the leading edge 23 of both the windward and leeward surfaces of the blade tip module 12 is without grooves or surface undulation when observed in the direction away from the root 22 towards the tip 21.

The exterior surface of the blade tip module 12 is notably rounded in appearance and generally of increased material thickness as compared with the tip end 9 of the main blade portion 13. In particular, the blade tip module 12 has a thickness or depth of solid metal at every point on its exterior surface that is at least approximately 6mm. The exterior surface of the blade tip module also has a radius of curvature at every point that is at least approximately 6mm. This means that the exterior surface of the blade tip module 12 is devoid of any cusps or sharp edges or sharp radii that would otherwise be susceptible to melting in the event of lightning strike. Notably the trailing edge 24 and the root chord r_{c} also meet these minimum thickness and minimum radius of curvature criteria.

As mentioned above, the blade tip module 12 is attached to the main blade portion 13 so that it abuts up against the blade tip interface 19. It is common for a blade to taper to an apex or point, so it will be appreciated that in the illustrated example the blade tip end 9 is truncated and does not taper to an apex or point. This provides the blade tip interface 19 which is substantially planar and defines an end face that is transverse to the longitudinal axis A of the blade. It will be noted that in the illustrated example the end face of the blade tip interface 19 is approximately perpendicular to the longitudinal axis of the blade, although this is not essential and so the term 'transverse' is to be interpreted as not necessarily being perpendicular.

As shown in figure 3 the end face 29 is thus surrounded by an outer edge 30 of the blade tip interface 19 that has an aerofoil profile. Since it has a flat end face 29, the tip of the blade 7 has a suitable surface for abutting up against the blade tip module 12. The blade tip interface 19 therefore acts as an interface or mounting to which the blade tip module 12 can be mounted. The configuration illustrated here is one possibility but the skilled person would understand that other configurations would be possible whilst retaining the function of being a mounting point for the blade tip module 12.

A simple butting relationship between the blade tip module 12 and the blade tip interface 19 would mean that the junction between the two parts would have to be sealed before the blade could be used. This is the case with the blade tip module described in WO2015/055213. However, it is an advantage of the blade tip module 12 of the illustrated embodiment that it is configured to abut up against the blade tip interface 19 in a way that protects the junction between the two parts.

As can be seen particularly from Figures 3, 4, 5 and 7, the blade tip module 12 is attached to the blade 7 at a module interface 31 which is shaped generally to match the aerofoil profile of the blade tip interface 19 at the tip end 9 of the blade 7, although being slightly larger so as to provide a clearance fit. The module interface 31 comprises a recess 32 as shown in Figures 5 and 7. The recess 32 is defined by an internal edge wall 33 and a base or floor 34. The blade tip module 12 comprises a lip 35 which extends around the periphery of the root end 22 of the blade tip module 12 and which defines the recess 32. The lip 35 comprises the material of the blade tip module 12 that is between the edge wall 33 and the outer surface of the tip module. The edge wall 33 therefore defines the radial inner part of the lip 35.

When the blade tip interface 19 is received in to the recess 32 so that the internal edge wall 33 overlaps an outer edge 19a of the blade tip interface 19, the outer edge 19a of the blade tip interface is covered by the lip 35. In the illustrated example, the internal edge wall 33 extends about the entirety of the outer edge 19a of the blade tip interface 19, in other embodiments the wall may be shaped so that it overlaps only a portion of the blade tip interface.

Significantly, the blade tip module 12 has a substantial thickness of material in the region of the lip 35. This means that the blade tip module 12 is robust against lightning strikes since there is plenty of mass of material around the lip 35 to absorb the intense heating effects of a lightning strike. Conversely, if the lip 35 was thin, then the blade tip module 12 would be more vulnerable to heat erosion. Therefore, the lip 35 can be described as a protective lip that protects the blade tip interface 19.

In order to accommodate the protruding tab portion of the attachment plate 18, the module interface 31 includes a rectangular pocket or slot 36 that extends into the body of the blade tip module 12 from an opening or mouth 37 at the floor 34 of the recess 32. The pocket 36 is dimensioned to receive the protruding tab portion of the attachment plate 18 so that the blade tip module 12 is simply able to be pushed onto the attachment plate 18 where it can be secured by suitable mechanical fasteners 20. In the illustrated example, the body of the blade tip module 12 is shown as defining three bores 38 that extend downwardly into the body of the blade tip module 12 from the leeward surface, L, thereof. The bores are formed by drilling. The bores 38 are not in-line so as to reduce stress concentrations.

Each of the bores 38 includes a relatively wide shank portion provided with a screw thread (not shown) and a relatively narrow locking pin portion. A suitably shaped screw threaded fastener 20 is therefore able to be screwed into the relatively wide shank portion such that a locking pin passes through the locking pin portion so as to engage with the corresponding locking hole provided in the attachment plate 18. After fastener installation the countersunk opening of the bores 38 is filled and smoothed in such a way that the original surface geometry is unaffected. It should be noted that this manner of fixing the blade tip module 12 to the attachment plate 18 is one way in which the fixing could be achieved, although various fixing techniques would be suitable.

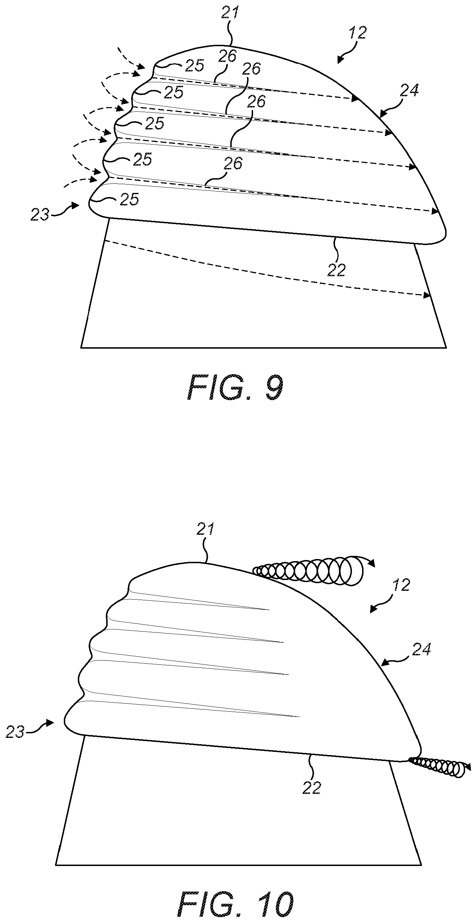

Figures 9 and 10 illustrate the aerodynamic effects of the shape of the blade tip module 12. Figure 9 shows how the wave-like leading edge profile divides or channels the upstream (oncoming) airflow into narrower streams over the surface of the blade tip module 12. This flow division energises the flow by increasing the flow velocity of the narrower streams, delaying flow detachment from the surface and stall.

Since the grooves 26 extend rearwardly from respective depressions between the forwardly projecting protuberances 25 at the leading edge 23, the narrower streams of energised flow created by the wave-like profile of the leading edge enter the grooves 26 which create an interference effect with the airflow so as to accelerate the airflow through the grooves. This further energises the flow through the grooves, further delaying flow detachment from the surface and stall.

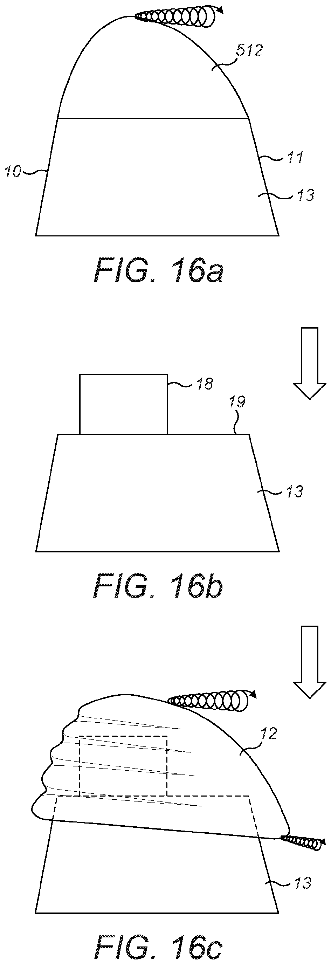

In Figure 9 the dotted lines indicate schematically the stream lines showing the convergent flow upstream of the leading edge 23 and the energised channelled flow exiting through the grooves 26. Figure 10 illustrates schematically the three dimensional aerodynamic effects achieved by the shape of the blade tip module 12. Channelling of the flow by means of the wave-like profiled leading edge 23 and the grooves 26 reduces three dimensional aerodynamic tip effects (of the blade as a whole) that would otherwise tend to allow the flow to roll up into a single vortex sheet at the tip of the blade. By maintaining attached flow, the main vortex sheet emanating from near the tip 21 of the blade tip module 12 has a similar magnitude to a conformal blade tip module (such as shown in Figure 16a). However, there may also be some minor vorticity activity occurring at the root trailing edge of the blade tip module 12.

By maintaining the main vortex sheet to a similar magnitude to a conformal blade tip module, the parasitic drag and noise due to the main vortex sheet remains substantially unchanged yet the significantly greater thickness and minimum radius of curvature of the blade tip module 12, as compared with a conformal blade tip module, means that the blade tip module 12 is substantially more robust to the effects of a lightning strike as compared to the thinner, sharper edged conformal blade tip module.

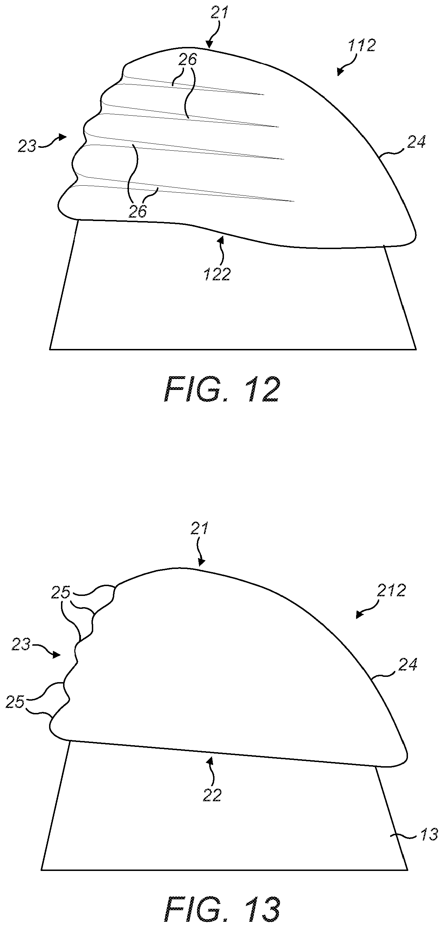

Figures 12 to 15 illustrate various alternative embodiments of the blade tip module in which like reference numerals have been used to denote like parts with the embodiment described previously. Any of the features of the alternative blade tip modules of figures 12 to 15 may be appropriately combined with any of the other embodiments described.

Figure 12 shows a blade tip module 112 having substantially the same wave-like profiled leading edge 23 and grooves 26 but with a curved root end 122. In all other respects the blade tip module 112 is identical to the blade tip module 12 described previously. By comparison with the straight inboard edge of the root end 22 of the blade tip module 12, the curved planform profile of the root end 122 may advantageously follow more closely the local streamlines over the tip end 9 of the main blade portion 13, delaying flow detachment and stall. In all other respects the blade tip module 112 is identical to the blade tip module 12 described previously.

Figure 13 illustrates a blade tip module 212 which is identical to the blade tip module 12 described previously but for the omission of the grooves 26 in the windward and leeward surfaces of the blade tip module. The leading edge 23 has the same wave-like profile which still achieves the 'tubercule effect' and therefore provides at least some of the advantageous aerodynamic effects achieved by the blade tip module 12. The absence of the grooves 26 may, for example, be appropriate where the additional aerodynamic effect of the grooves is not required or where the overall depth of material of the blade tip module in the thickness direction cannot support the grooves whilst providing a minimum thickness of material to be robust against lightning strike. In all other respects the blade tip module 212 is identical to the blade tip module 12 as described previously.

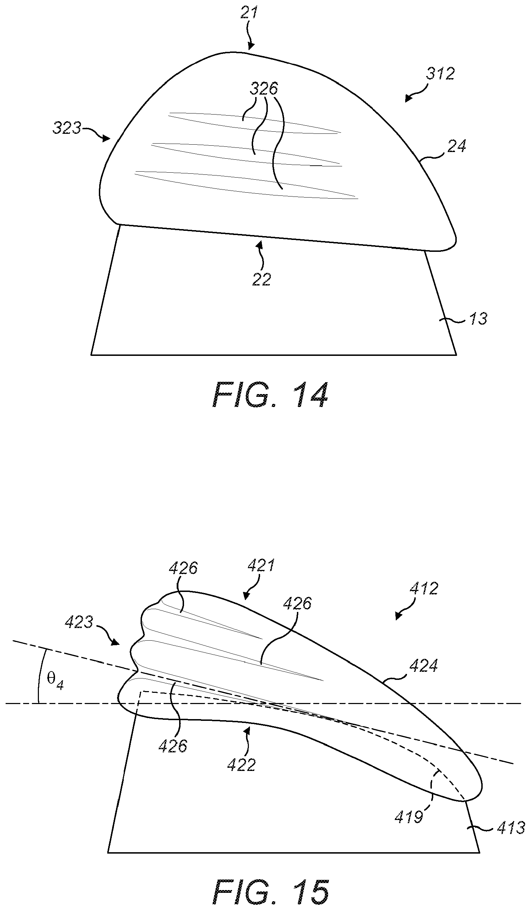

Figure 14 illustrates a blade tip module 312 having substantially the same trailing edge 24 but has a smoothly curved leading edge 323 that is without inflection and therefore does not have a wave-like profile. The blade tip module 312 still has grooves 326 in the windward and leeward surfaces (or just one of these) but the grooves do not extend from the leading edge 323 and instead extend from a short distance behind the leading edge 323. The grooves 326 therefore take the form of channels which are smoothly tapered into the exterior surface of the blade tip module 312 at both ends in the groove longitudinal direction. The grooves 326 may still provide the beneficial aerodynamic effect of creating an interference effect for the air flow so as to accelerate the air flow through the grooves and thereby energise the flow through the grooves to delay flow detachment from the surface and stall. In all other respects the blade tip module 312 is identical to the blade tip module 12 described previously.

Figure 15 illustrates a blade tip module 412 which is conceptually very similar to the blade tip module 12 described previously but which has several differences in terms of shape. Similar to the blade tip module 12, the blade tip module 412 has a wave-like profiled leading edge 423 and generally chordwise extending grooves 426 which emanate from depressions between rounded protrusions at the leading edge 423. Overall the blade tip module 412 is tilted so as to produce a greater "toe in" angle θ₄, referring to the angle between the blade longitudinal axis A and the longitudinal axis of the blade tip module 412. This ensures that the grooves 426, which extend generally chordwise (i.e. transverse and generally perpendicular to the longitudinal axis of the blade tip module) align more closely with the local flow around the wind turbine blade tip.

The inboard edge at the root end 422 of the blade tip module 412 is also curved so as to curve inboard (towards the hub 6) from the leading edge to the trailing edge. The toe in angle θ₄ may be sufficiently great that the blade tip interface 419 is curved such that the blade tip interface does not project through to the trailing edge 424 of the blade tip module 412 and thereby maintains the minimum thickness of material of the body of the blade tip module 412. The grooves 426 extend generally parallel to one another and are formed on both the windward and leeward surfaces of the blade tip module 412. Again due to the significant tilt of the blade tip module 412 the length of the grooves 426 shortens significantly between the inboard groove and the outboard groove and overall there are fewer grooves as compared with the blade tip module 12. Whilst the blade tip module 412 has been substantially optimised for aerodynamic performance and lightning strike robustness, the modifications to the blade tip interface 419 so as to be curved, as compared with the planar transverse truncated blade tip interface 19 of the main blade portion 13, means that the blade tip module 412 is unlikely to be suitable for retrofitting to an existing wind turbine blade.

Finally, Figure 16 illustrates a method of retrofitting the blade tip module 12 described previously to an existing wind turbine blade 7 to replace a 'conformal' blade tip module 512. The conformal blade tip module 512 is illustrated in Figure 16a and is considered conformal in that the leading and trailing edges 10, 11 of the main blade portion 13 smoothly continue into the leading and trailing edges of the conformal blade tip module 512 so as to meet at an apex at the tip, and the windward and leeward surface of the main blade portion also continue smoothly into the windward and leeward surface of the blade tip module 512 to meet at an apex at the tip. Removal of the conformal blade tip module 512 exposes the blade tip interface 19 and the projecting tab portion of the attachment plate 18 as shown in Figure 16b. The blade tip interface 19 is then ready to receive the blade tip module 12 as shown in Figure 16c which is attached by fastening in the manner described previously. Replacing the conformal blade tip module 512 with the blade tip module 12 may slightly reduce the overall span of the blade but the aerodynamic impact of this is negligible.

Although the invention has been described above with reference to one or more preferred embodiments, it will be appreciated that various changes or modifications may be made without departing from the scope of the invention as defined in the appended claims.

## Claims

1. A wind turbine blade (1) comprising:
a main blade portion having a longitudinal axis that extends between a root end (8) and a tip end (9) of the main blade portion, and
a conductive blade tip module (12) coupled to a lightning protection system of the wind turbine blade, the conductive blade tip module is mounted to the tip end (9) of the main blade portion and has a leading edge (23), a trailing edge (24), a windward surface extending between the leading edge (23) and the trailing edge (24), and a leeward surface extending between the leading edge (23) and the trailing edge (24),
wherein the main blade portion comprises a blade tip interface (19) that is the outermost part of the main blade portion which engages with and is coupled to the blade tip module (12),
and **characterized in that** the blade tip module (12) leading edge (23) has a wave-like profile and/or wherein at least one of the windward and leeward surfaces of the blade tip module (12) has a plurality of grooves (26) extending towards the trailing edge (24), and **in that** the blade tip module (12) has a chord length at a root end (22) that is greater than a chord length of the blade tip interface (19).

2. The wind turbine blade (1) of claim 1, wherein the wave-like profile of the blade tip module (12) leading edge (23) comprises a plurality of rounded protuberances (25) extending forwardly.

3. The wind turbine blade (1) of any preceding claim, wherein the wave-like profile of the blade tip module (12) leading edge (23) is substantially sinusoidal.

4. The wind turbine blade (1) of any preceding claim, wherein the wave-like profile extends along substantially the entire leading edge (23) of the blade tip module (12).

5. The wind turbine blade (1) of any preceding claim, wherein the plurality of grooves (26) extend from adjacent the leading edge of the blade tip module.

6. The wind turbine blade (1) of any preceding claim, wherein the plurality of grooves (26) each extend up to approximately 50% to 80% of the blade tip module local chord, preferably up to approximately 60% to 70% of the blade tip module local chord.

7. The wind turbine blade (1) of any preceding claim, wherein the plurality of grooves (26) each extend from a depression between adjacent protuberances (25) of the wave-like profile at the blade tip module leading edge (23).

8. The wind turbine blade (1) of any preceding claim, wherein the plurality of grooves (26) each have a depth and/or width which decreases in the direction towards the trailing edge (24).

9. The wind turbine blade (1) of any preceding claim, wherein the plurality of grooves (26) each smoothly taper into the windward or leeward surfaces towards the trailing edge (24) of the blade tip module (12).

10. The wind turbine blade (1) of any preceding claim, wherein the plurality of grooves (26) each extend at an angle to the local chordline at the tip end (9) of the main blade portion in the direction towards the trailing edge (24).

11. The wind turbine blade (1) of claim 10, wherein the plurality of grooves (26) each extend toward the local chordline at the tip end (9) of the main blade portion in the direction towards the trailing edge (24).

12. The wind turbine blade (1) of any preceding claim, wherein the plurality of grooves (26) are provided on both the windward and leeward surfaces of the blade tip module (12).

13. The wind turbine blade (1) of any preceding claim, wherein the blade tip module (12) is metal.

14. The wind turbine (1) of any preceding claim, wherein the blade tip module (12) consists exclusively of metal.

15. The wind turbine blade (1) of any preceding claim, wherein the tip end (9) of the main blade portion is truncated and has a blade tip interface (19) that defines an outer edge (30), and wherein the blade tip module (12) is configured to fit against the blade tip interface (19) such that a lip (35) of the blade tip module overlaps the outer edge (30) of the blade tip interface (19).

## Patentansprüche

1. Windkraftanlagenblatt (1), umfassend:
einen Hauptblattabschnitt, der eine Längsachse aufweist, die sich zwischen einem Wurzelende (8) und einem Spitzenende (9) des Hauptblattabschnitts erstreckt, und
ein leitfähiges Blattspitzenmodul (12), das mit einer Blitzschutzeinrichtung des Windkraftanlagenblattes gekoppelt ist, wobei das leitfähige Blattspitzenmodul an dem Spitzenende (9) des Hauptblattabschnitts montiert ist und eine Blattvorderkante (23), eine Blatthinterkante (24), eine luvseitige Oberfläche, die sich zwischen der Blattvorderkante (23) und der Blatthinterkante (24) erstreckt, und eine leeseitige Oberfläche, die sich zwischen der Blattvorderkante (23) und der Blatthinterkante (24) erstreckt, aufweist,
wobei der Hauptblattabschnitt eine Blattspitzenschnittstelle (19) umfasst, die der äußerste Teil des Hauptblattabschnitts ist, der mit dem Blattspitzenmodul (12) in Eingriff steht und damit gekoppelt ist,
und **dadurch gekennzeichnet, dass** die Blattvorderkante (23) des Blattspitzenmoduls (12) ein wellenähnliches Profil aufweist und/oder wobei mindestens eine der luvseitigen und leeseitigen Oberflächen des Blattspitzenmoduls (12) eine Vielzahl von Rillen (26) aufweist, die sich in Richtung der Blatthinterkante (24) erstreckt, und dadurch, dass das Blattspitzenmodul (12) an einem Wurzelende (22) eine Sehnenlänge aufweist, die größer ist als eine Sehnenlänge der Blattspitzenschnittstelle (19).

2. Windkraftanlagenblatt (1) nach Anspruch 1, wobei das wellenähnliche Profil der Blattvorderkante (23) des Blattspitzenmoduls (12) eine Vielzahl von sich nach vorn erstreckenden, abgerundeten Vorsprüngen (25) umfasst.

3. Windkraftanlagenblatt (1) nach einem vorstehenden Anspruch, wobei das wellenähnliche Profil der Blattvorderkante (23) des Blattspitzenmoduls (12) im Wesentlichen sinusförmig ist.

4. Windkraftanlagenblatt (1) nach einem vorstehenden Anspruch, wobei sich das wellenähnliche Profil im Wesentlichen entlang der gesamten Blattvorderkante (23) des Blattspitzenmoduls (12) erstreckt.

5. Windkraftanlagenblatt (1) nach einem vorstehenden Anspruch, wobei sich die Vielzahl von Rillen (26) von angrenzend an die Blattvorderkante des Blattspitzenmoduls aus erstreckt.

6. Windkraftanlagenblatt (1) nach einem vorstehenden Anspruch, wobei sich die Vielzahl von Rillen (26) jeweils bis zu etwa 50 % bis 80 % der lokalen Sehne des Blattspitzenmoduls, bevorzugt bis zu etwa 60 % bis 70 % der lokalen Sehne des Blattspitzenmoduls erstreckt.

7. Windkraftanlagenblatt (1) nach einem vorstehenden Anspruch, wobei sich die Vielzahl von Rillen (26) jeweils aus einer Vertiefung zwischen angrenzenden Vorsprüngen (25) des wellenähnlichen Profils an der Blattvorderkante (23) des Blattspitzenmoduls erstreckt.

8. Windkraftanlagenblatt (1) nach einem vorstehenden Anspruch, wobei die Vielzahl von Rillen (26) jeweils eine Tiefe und/oder Breite aufweist, die in der Richtung der Blatthinterkante (24) abnimmt.

9. Windkraftanlagenblatt (1) nach einem vorstehenden Anspruch, wobei sich die Vielzahl von Rillen (26) jeweils sanft in die luvseitigen oder leeseitigen Oberflächen in Richtung der Blatthinterkante (24) des Blattspitzenmoduls (12) verjüngt.

10. Windkraftanlagenblatt (1) nach einem vorstehenden Anspruch, wobei sich die Vielzahl von Rillen (26) jeweils in einem Winkel zu der lokalen Sehnenlinie an dem Spitzenende (9) des Hauptblattabschnitts in der Richtung zu der Blatthinterkante (24) erstreckt.

11. Windkraftanlagenblatt (1) nach Anspruch 10, wobei sich die Vielzahl von Rillen (26) jeweils in Richtung der lokalen Sehnenlinie an dem Spitzenende (9) des Hauptblattabschnitts in der Richtung der Blatthinterkante (24) erstreckt.

12. Windkraftanlagenblatt (1) nach einem vorstehenden Anspruch, wobei die Vielzahl von Rillen (26) an beiden, der luvseitigen und leeseitigen Oberfläche des Blattspitzenmoduls (12), bereitgestellt ist.

13. Windkraftanlagenblatt (1) nach einem vorstehenden Anspruch, wobei das Blattspitzenmodul (12) aus Metall ist.

14. Windkraftanlage (1) nach einem vorstehenden Anspruch, wobei das Blattspitzenmodul (12) ausschließlich aus Metall besteht.

15. Windkraftanlagenblatt (1) nach einem vorstehenden Anspruch, wobei das Spitzenende (9) des Hauptblattabschnitts abgestumpft ist und eine Blattspitzenschnittstelle (19) aufweist, die eine Außenkante (30) definiert, und wobei das Blattspitzenmodul (12) dazu konfiguriert ist, derart gegen die Blattspitzenschnittstelle (19) zu passen, dass eine Lippe (35) des Blattspitzenmoduls die Außenkante (30) der Blattspitzenschnittstelle (19) überlappt.

## Revendications

1. Pale d'éolienne (1), comprenant :
une partie de pale principale présentant un axe longitudinal qui s'étend entre une extrémité de pied (8) et un bout de bout (9) de la partie de pale principale, et
un module de bout de pale conducteur (12) couplé à un système de protection contre la foudre de la pale d'éolienne, le module de bout de pale conducteur est monté sur l'extrémité de bout (9) de la partie de pale principale et présente un bord d'attaque (23), un bord de fuite (24), une surface au vent s'étendant entre le bord d'attaque (23) et le bord de fuite (24), et une surface sous le vent s'étendant entre le bord d'attaque (23) et le bord de fuite (24),
dans laquelle la partie de pale principale comprend une interface de bout de pale (19) qui est la partie la plus extérieure de la partie de pale principale qui vient en prise avec le module de bout de pale (12) et est couplée à celui-ci,
et **caractérisée en ce que** le bord d'attaque (23) du module de bout de pale (12) présente un profil semblable à une onde et/ou dans laquelle au moins une des surfaces au vent et sous le vent du module de bout de pale (12) présente une pluralité de rainures (26) s'étendant vers le bord de fuite (24), et **en ce que** le module de bout de pale (12) présente une longueur de corde à une extrémité de pied (22) qui est supérieure à une longueur de corde de l'interface de bout de pale (19).

2. Pale d'éolienne (1) selon la revendication 1, dans laquelle le profil semblable à une onde du bord d'attaque (23) du module de bout de pale (12) comprend une pluralité de protubérances arrondies (25) s'étendant vers l'avant.

3. Pale d'éolienne (1) selon une quelconque revendication précédente, dans laquelle le profil semblable à une onde du bord d'attaque (23) du module de bout de pale (12) est sensiblement sinusoïdal.

4. Pale d'éolienne (1) selon une quelconque revendication précédente, dans laquelle le profil semblable à une onde s'étend le long de sensiblement tout le bord d'attaque (23) du module de bout de pale (12).

5. Pale d'éolienne (1) selon une quelconque revendication précédente, dans laquelle la pluralité de rainures (26) s'étendent à partir d'un endroit adjacent au bord d'attaque du module de bout de pale.

6. Pale d'éolienne (1) selon une quelconque revendication précédente, dans laquelle la pluralité de rainures (26) s'étendent chacune jusqu'à approximativement 50 % à 80 % de la corde locale du module de bout de pale, de préférence jusqu'à approximativement 60 % à 70 % de la corde locale du module de bout de pale.

7. Pale d'éolienne (1) selon une quelconque revendication précédente, dans laquelle la pluralité de rainures (26) s'étendent chacune à partir d'un enfoncement entre des protubérances adjacentes (25) du profil semblable à une onde au niveau du bord d'attaque du module de bout de pale (23).

8. Pale d'éolienne (1) selon une quelconque revendication précédente, dans laquelle la pluralité de rainures (26) présentent chacune une profondeur et/ou une largeur qui diminue dans la direction vers le bord de fuite (24).

9. Pale d'éolienne (1) selon une quelconque revendication précédente, dans laquelle la pluralité de rainures (26) sont effilées chacune de manière régulière dans les surfaces au vent ou sous le vent vers le bord de fuite (24) du module de bout de pale (12).

10. Pale d'éolienne (1) selon une quelconque revendication précédente, dans laquelle la pluralité de rainures (26) s'étendent chacune à un angle par rapport à la ligne de corde locale au niveau de l'extrémité de bout (9) de la partie de pale principale dans la direction vers le bord de fuite (24).

11. Pale d'éolienne (1) selon la revendication 10, dans laquelle la pluralité de rainures (26) s'étendent chacune vers la ligne de corde locale au niveau de l'extrémité de bout (9) de la partie de pale principale dans la direction vers le bord de fuite (24).

12. Pale d'éolienne (1) selon une quelconque revendication précédente, dans laquelle la pluralité de rainures (26) sont ménagées à la fois sur les surfaces au vent et sous le vent du module de bout de pale (12).

13. Pale d'éolienne (1) selon une quelconque revendication précédente, dans laquelle le module de bout de pale (12) est en métal.

14. Ensemble de pale d'éolienne selon la revendication 1, dans lequel le module de bout de pale (12) se compose exclusivement de métal.

15. Pale d'éolienne (1) selon une quelconque revendication précédente, dans laquelle l'extrémité de bout (9) de la partie de pale principale est tronquée et présente une interface de bout de pale (19) qui définit un bord externe (30) et dans laquelle le module de bout de pale (12) est configuré pour s'adapter contre l'interface de bout de pale (19) de telle sorte qu'une lèvre (35) du module de bout de pale chevauche le bord externe (30) de l'interface de bout de pale (19).
